# FASCICULE DE BREVET EUROPEEN

(11) **EP 4 073 371 B1**
(45) Date de publication et mention de la délivrance du brevet: **31.01.2024**
(21) Numéro de dépôt: 20845179.9
(22) Date de dépôt: 11.12.2020
(51) Int. Cl.: F02K 3/02, F01D 25/18, F02K 3/06, F02C 7/36

(54) **SYSTÈME PROPULSIF AÉRONAUTIQUE À FAIBLE DÉBIT DE FUITE ET RENDEMENT PROPULSIF AMÉLIORÉ**
AERONAUTISCHES ANTRIEBSSYSTEM MIT GERINGER LECKFLUSSRATE UND VERBESSERTER ANTRIEBSSYSTEMSEFFIZIENZ
AERONAUTICAL PROPULSION SYSTEM HAVING A LOW LEAKAGE FLOW RATE AND IMPROVED PROPULSION EFFICIENCY

(30) Priorité: 11.12.2019 FR 1914191
(43) Date de publication de la demande: 19.10.2022
(73) Titulaire: SAFRAN AIRCRAFT ENGINES, 75015 Paris (FR); Safran Transmission Systems, 92700 Colombes (FR)
(72) Inventeur: FRANTZ, Caroline Marie, 77550 MOISSY-CRAMAYEL (FR); CHARIER, Gilles Alain Marie, 77550 MOISSY-CRAMAYEL (FR); SIMON, Adrien Louis, 77550 MOISSY-CRAMAYEL (FR)
(74) Mandataire: Regimbeau
(86) Numéro de dépôt international: PCT/FR2020/052390
(87) Numéro de publication internationale: WO 2021/116620

(56) Documents cités:
- US-A1- 2016 090 988
- US-A1- 2016 356 225
- US-A1- 2018 291 819

## Description

### DOMAINE DE L'INVENTION

La présente invention concerne le domaine des systèmes propulsifs aéronautiques, et plus précisément des systèmes propulsifs à double flux présentant un taux de dilution élevé, voire très élevé, et un haut rendement propulsif.

### ETAT DE LA TECHNIQUE

Un système propulsif à double flux comprend généralement, d'amont en aval dans le sens de l'écoulement des gaz, une soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire. La soufflante (ou hélice) peut être carénée et logée dans un carter de soufflante ou en variante non carénée du type USF (acronyme anglais de Unducted Single Fan, pour soufflante unique non carénée). Les aubes de soufflante peuvent être fixes ou présenter un calage variable, le calage étant ajusté en fonction des phases de vol par un mécanisme de changement de pas.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression.

Afin d'améliorer le rendement propulsif du système propulsif et de réduire sa consommation spécifique ainsi que le bruit émis par la soufflante, il a été proposé des systèmes propulsifs présentant un taux de dilution (bypass ratio en anglais), c'est-à-dire le rapport entre le débit du flux secondaire et le débit du flux primaire, élevé. Par taux de dilution élevé, on comprendra ici un taux de dilution supérieur ou égal à 10, par exemple compris entre 10 et 80 inclus. Pour atteindre de tels taux de dilution, la soufflante est découplée de la turbine basse pression, permettant ainsi d'optimiser indépendamment leur vitesse de rotation respective. Généralement, le découplage est réalisé à l'aide d'un réducteur tel qu'un mécanisme de réduction épicycloïdal ou planétaire, placé entre l'extrémité amont de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet ainsi de réduire la vitesse de rotation et le rapport de pression de la soufflante et d'augmenter la puissance extraite par la turbine basse pression. En effet, l'efficacité globale des systèmes propulsifs aéronautiques est conditionnée au premier ordre par le rendement propulsif, qui est favorablement influencé par une minimisation de la variation d'énergie cinétique de l'air à la traversée du système propulsif. Dans un système propulsif à taux de dilution élevé, l'essentiel du débit générant l'effort propulsif est constitué par le flux secondaire du système propulsif, l'énergie cinétique du flux secondaire étant majoritairement affecté par la compression qu'il subit lors de la traversée de la soufflante. Le rendement propulsif et le rapport de pression de la soufflante sont donc liés : plus le rapport de pression de la soufflante est faible, meilleur sera le rendement propulsif.

Au-delà de son impact majeur sur le rendement propulsif, le choix du rapport de pression de la soufflante influence également diverses caractéristiques technologiques du système propulsif, dont le diamètre de la soufflante (et par extension les dimensions externes du système propulsif et de sa nacelle, masse et traînée), le régime de rotation de la soufflante et le rapport de réduction du mécanisme de réduction.

Toutefois, (i) plus le rapport de réduction augmente et plus son encombrement radial augmente de sorte que le mécanisme de réduction s'intègre difficilement sous la veine d'écoulement primaire et (ii) plus la vitesse de l'arbre basse pression est élevée, plus la vitesse du compresseur basse pression, qui est entrainé par l'arbre basse pression, est élevée et plus le rayon moyen du compresseur basse pression doit être bas pour limiter la vitesse périphérique en sommet des aubages du compresseur basse pression.

Ces deux contraintes combinées conduisent à un canal d'entrée de la veine d'écoulement primaire (habituellement désigné par sa forme en col de cygne) en amont du compresseur basse pression présentant une pente d'autant plus importante que l'encombrement radial du mécanisme de réduction est élevé et le rayon moyen du compresseur basse pression est bas. Il en résulte un accroissement des pertes aérodynamiques dans ce canal et une mauvaise alimentation du compresseur basse pression qui portent préjudice au rendement propulsif du système propulsif.

Actuellement, les mécanismes de réduction privilégiés sont du type réducteur épicycloïdal, dans lesquels la soufflante est entrainée par le porte-satellite, la couronne étant fixée au stator du moteur. De telles architectures permettent en effet d'atteindre des rapports de réduction plus élevés que les mécanismes de réduction du type planétaire (entrainement de la soufflante par la couronne). L'utilisation d'un réducteur épicycloïdal implique cependant de transférer l'huile du repère fixe du moteur vers le repère tournant du porte-satellites pour alimenter les paliers et dentures de ce réducteur. En outre, dans le cas d'un système propulsif comprenant un mécanisme de changement de pas des aubes de soufflante, il est également nécessaire de transférer l'alimentation d'huile du mécanisme de changement de pas d'un repère fixe (groupe de lubrification) du système propulsif à un repère tournant de la soufflante. Pour cela, il est connu d'utiliser un OTB (acronyme anglais de Oil Transfer Bearing, pour joint hydraulique tournant multi-passage ou transfert d'huile tournant), qui comprend une partie fixe par rapport à une partie stator du système de propulsion et qui est connectée, via des canalisations dédiées, au groupe de lubrification comprenant un réservoir d'huile et une pompe, et une partie tournante qui est solidaire en mouvement d'une partie rotor du système de propulsion. Typiquement, dans le cas où le mécanisme de réduction comprend un réducteur épicycloïdal, la partie tournante de l'OTB est montée sur l'arbre basse pression, en en aval du réducteur (par rapport au sens d'écoulement des gaz dans le système propulsif) et l'huile est ensuite transférée via des canalisations passant au travers du porte-satellites du réducteur, qui est fixe. L'OTB est donc contraint en rayon par le diamètre de l'arbre basse pression, ce qui implique des fuites importantes (le débit de fuite étant proportionnel au rayon de l'OTB) et donc une faible durée de vie pour ce composant. De plus, l'OTB est inaccessible lors d'une opération de maintenance puisqu'il est en aval du réducteur. En cas de défaillance, il est donc nécessaire de démonter le réducteur pour pouvoir accéder à l'OTB.

Actuellement, la soufflante est supportée par deux paliers. Toutefois, lorsque ces deux paliers sont situés à l'amont du mécanisme de réduction, le mécanisme de réduction se trouve en porte à faux ce qui génère une dynamique défavorable au niveau de la soufflante. Il a donc été proposé des systèmes propulsifs dans lesquels le palier avant de la soufflante, ou palier de butée, s'étend en amont du mécanisme de réduction tandis que le palier arrière de la soufflante est placé en aval du mécanisme de réduction. Cette configuration améliore la reprise des efforts, le mécanisme de réduction étant maintenu de part et d'autre par des paliers, et la situation dynamique de la soufflante. Afin de ne pas dégrader la dynamique de la soufflante, il est donc préférable de préserver cette architecture des paliers de la soufflante. Toutefois, cela peut poser des difficultés lorsque l'on cherche en parallèle à réduire l'encombrement, notamment radial, du mécanisme de réduction et à simplifier l'alimentation d'huile. Le centre de gravité des aubes de la soufflante doit en outre être le plus près possible des paliers supportant le rotor de celle-ci.

Les documents US 2018/291819 A1, US 2016/090988 A1 et US 2016/356225 A1 présentent des systèmes propulsifs connus de l'art antérieur.

### EXPOSE DE L'INVENTION

Un but de l'invention est de proposer un système propulsif aéronautique, tel qu'une turbomachine à double flux dont la soufflante est carénée, avec ou sans calage variable des aubes de soufflante, ou qu'un système propulsif non caréné du type USF, présentant un taux de dilution élevé et un rendement propulsif amélioré, permettant le cas échéant d'avoir une dynamique de la soufflante favorable et, optionnellement, un système de lubrification est simplifié.

Il est à cet effet proposé, selon un premier aspect de l'invention un système propulsif aéronautique comprenant :
- un arbre d'entrainement mobile en rotation autour d'un axe de rotation,
- une soufflante,
- un arbre de soufflante configuré pour entrainer la soufflante en rotation autour de l'axe de rotation,
- un mécanisme de réduction couplant l'arbre d'entrainement et l'arbre de soufflante.

De plus, le mécanisme de réduction a deux étages de réduction et comporte :
- un pignon solaire, centré sur l'axe de rotation et configuré pour être entrainé en rotation par l'arbre d'entrainement,
- une couronne, coaxiale avec le pignon solaire et configurée pour entrainer en rotation l'arbre de soufflante autour de l'axe de rotation, et
- une série de satellites répartis circonférentiellement autour de l'axe de rotation entre le pignon solaire et la couronne, chaque satellite comprenant une première portion engrenée avec le pignon solaire et une deuxième portion engrenée avec la couronne, un diamètre de la première portion étant différent d'un diamètre de la deuxième portion.

Par ailleurs, la première portion des satellites s'étend entre la deuxième portion des satellites et la soufflante.

Certaines caractéristiques préférées mais non limitatives du système propulsif selon le premier aspect sont les suivantes, prises individuellement ou en combinaison :
- le système propulsif comprend en outre un joint hydraulique tournant multipassage positionné entre la soufflante et le mécanisme de réduction.
- dans lequel la série de satellites est montée sur un porte-satellites et le système propulsif comprend en outre un réservoir d'huile et au moins une canalisation, la canalisation connectant fluidiquement le réservoir d'huile au joint hydraulique en passant par le porte-satellites.
- le joint hydraulique comprend une partie tournante montée sur l'arbre de soufflante et une partie fixe montée sur le porte-satellites.
- le joint hydraulique est positionné radialement à l'intérieur par rapport à l'arbre de soufflante.
- le joint hydraulique est plus proche de l'axe de rotation que l'arbre de soufflante.
- le système propulsif comprend en outre un mécanisme de changement de pas des aubes de la soufflante et une servitude connectant fluidiquement le joint hydraulique au mécanisme de changement de pas.
- l'arbre d'entrainement est raccordé au pignon solaire au niveau d'une première interface, l'arbre de soufflante est raccordé à la couronne au niveau d'une deuxième interface, la première interface étant située plus en amont que la deuxième interface.
- le système propulsif comprend en outre un premier palier de soufflante s'étendant entre la soufflante et le mécanisme de réduction et un deuxième palier de soufflante s'étendant entre le mécanisme de réduction et une roue mobile d'un compresseur basse pression.
- le premier palier de soufflante est monté d'une part sur l'arbre de soufflante et d'autre part sur une virole interne d'un canal d'entrée d'un flux primaire du système propulsif.
- la série de satellites est montée sur un porte-satellites et le deuxième palier de soufflante comprend une bague interne et une bague externe, l'une parmi la bague interne et la bague externe étant montée sur la couronne, l'autre parmi la bague interne et la bague externe étant montée sur le porte-satellites.
- le deuxième palier de soufflante est monté d'une part sur la couronne et d'autre part sur une virole interne d'un canal d'entrée d'un flux primaire du système propulsif.
- la série de satellites est montée sur un porte-satellites et le mécanisme de réduction comprend en outre une butée interne montée d'une part sur l'arbre d'entrainement et d'autre part sur le porte-satellites, radialement à l'intérieur de la deuxième portion des satellites ou immédiatement en aval de la deuxième portion desdits satellites.
- le mécanisme de réduction comprend en outre une butée interne montée d'une part sur l'arbre d'entrainement dans une zone située en amont de la première portion desdits satellites.
- le système propulsif aéronautique peut comprendre une turbomachine à double flux dont la soufflante est carénée, avec ou sans calage variable des aubes de soufflante, ou un système propulsif non caréné du type USF.

Selon un deuxième aspect, l'invention propose un aéronef comprenant un système propulsif aéronautique conforme au premier aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple de système propulsif aéronautique comprenant une soufflante carénée à calage variable conforme à un mode de réalisation de l'invention.
La figure 2 illustre de façon schématique un exemple de système propulsif aéronautique comprenant une soufflante non carénée type USF conforme à un mode de réalisation de l'invention.
La figure 3 est une vue en coupe détaillée, partielle et schématique d'un exemple de mécanisme de réduction pouvant être utilisé dans un système propulsif aéronautique conforme à l'invention. Le canal d'entrée d'un système propulsif de l'art antérieur a en outre été représenté en pointillés sur cette figure.
La figure 4 est une vue partielle en détail d'une portion aval du mécanisme de réduction de la figure 3, sur laquelle ont été représentés schématiquement trois exemples d'emplacement et de raccordement alternatifs du palier arrière de la soufflante.
La figure 5 est une vue partielle en détail du mécanisme de réduction de la figure 3, sur laquelle ont été représentés schématiquement deux exemples d'emplacement et de raccordement alternatif de la butée interne du mécanisme de réduction.
La figure 6 est une vue schématique illustrant d'un côté (à gauche) un mécanisme de réduction planétaire biétage inversé et d'un autre côté (à droite) un mécanisme de réduction épicycloïdal simple étage, pour un même rapport de réduction.

Sur l'ensemble des figures, les éléments similaires portent des références identiques.

### DESCRIPTION DETAILLEE DE L'INVENTION

Le système propulsif 1 comprend, de manière conventionnelle, une soufflante 2 et un corps primaire. Le corps primaire comprend, dans le sens d'écoulement des gaz dans le système propulsif 1, un canal d'entrée 3 s'étendant immédiatement en aval de la soufflante 2, un compresseur basse pression 4, un compresseur haute pression 5, une chambre de combustion 6, une turbine haute pression 7, une turbine basse pression 9 et une tuyère d'échappement des gaz. La turbine haute pression 7 entraine en rotation le compresseur haute pression 5 par l'intermédiaire d'un arbre haute pression 8 tandis que la turbine basse pression 9 entraine en rotation le compresseur basse pression 4 et la soufflante 2 par l'intermédiaire d'un arbre basse pression 10.

La soufflante 2 comprend un disque de soufflante 2 pourvu d'aubes de soufflante 11 à sa périphérie qui, lorsqu'elles sont mises en rotation, entraînent le flux d'air dans les espaces d'écoulement primaire et secondaire du système propulsif 1.

Le compresseur basse pression 4 comprend au moins un étage *de compression* comprenant une roue d'aubes mobiles (rotor) entrainée par l'arbre basse pression 10 et tournant devant une série d'aubes fixes 15 (stators, ou redresseurs) réparties circonférentiellement autour de l'axe X. Le cas échéant, le compresseur basse pression 4 peut comprendre au moins deux étages de compression.

Le canal d'entrée 3 s'étend immédiatement en aval de la soufflante 2. Il présente une entrée 18 adjacente au pied 17 des aubes de soufflante 11, à l'aplomb du bec de séparation 19 de l'espace d'écoulement primaire et de l'espace d'écoulement secondaire, et une sortie 20 adjacente au compresseur basse pression 4. Le canal d'entrée 3 présente la forme générale d'un col de cygne, de sorte que l'entrée 18 est radialement plus éloignée de l'axe de rotation X que la sortie 20. Le canal d'entrée 3 comprend, de manière connue en soi, une rangée d'aubes fixes réparties circonférentiellement autour de l'axe X.

L'invention s'applique à tout type de système propulsif 1 aéronautique à double flux, que la soufflante 2 soit carénée ou non carénée, à aubes à calage fixes ou à calage variable.

Dans la présente demande, l'amont et l'aval sont définis par rapport au sens d'écoulement normal du gaz à travers le système propulsif. Par ailleurs, La direction axiale correspond à la direction de l'axe de rotation X et une direction radiale est une direction perpendiculaire à cet axe de rotation X et passant par lui. Par ailleurs, la direction circonférentielle (ou latérale) correspond à une direction perpendiculaire à l'axe de rotation X et ne passant pas par lui. Sauf précision contraire, interne (respectivement, intérieur) et externe (respectivement, extérieur), respectivement, sont utilisés en référence à une direction radiale de sorte que la partie ou la face interne d'un élément est plus proche de l'axe de rotation X que la partie ou la face externe du même élément.

Le système propulsif 1 présente un taux de dilution élevé. Par taux de dilution élevé, on comprendra ici un taux de dilution supérieur ou égal à 10, par exemple compris entre 10 et 31 dans le cas d'une soufflante 2 carénée et entre 40 et 80 dans le cas d'une soufflante 2 non carénée. Pour cela, la soufflante 2 est découplée de la turbine basse pression 9 pour optimiser indépendamment leur vitesse de rotation respective à l'aide d'un mécanisme de réduction 12 placé entre l'extrémité amont (par rapport au sens d'écoulement des gaz dans le système propulsif 1) de l'arbre basse pression 10 et la soufflante 2. La soufflante 2 est alors entrainée par l'arbre basse pression 10 par l'intermédiaire du mécanisme de réduction 12 et d'un arbre de soufflante 13, qui est fixé entre le mécanisme de réduction 12 et le disque de la soufflante 2. L'arbre de soufflante 13 est mobile en rotation autour d'un axe de rotation X coaxial à l'axe de rotation X de l'arbre basse pression 10.

Pour calculer le taux de dilution, le débit du flux secondaire et le débit du flux primaire sont mesurés lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer.

Afin d'améliorer le rendement propulsif du système propulsif 1, le mécanisme de réduction est planétaire et biétage.

Plus précisément, le mécanisme de réduction 12 comprend :
- un pignon solaire 33, centré sur l'axe de rotation X et configuré pour être entrainé en rotation par l'arbre basse pression 10, qui joue le rôle d'un arbre d'entrainement,
- une couronne 25, coaxiale avec le pignon solaire 33 et configurée pour entrainer en rotation l'arbre de soufflante 13 autour de l'axe de rotation X, et
- une série de satellites 28 répartis circonférentiellement autour de l'axe de rotation X entre le pignon solaire 33 et la couronne 25, chaque satellite 28 comprenant une première portion 38 engrenée avec le pignon solaire 33 et une deuxième portion 39 engrenée avec la couronne 25.

Les premières portions 38 des satellites 28 s'étendent dans un même plan et forment un premier étage 27 du mécanisme de réduction 12 tandis que les deuxièmes portions 39 des satellites 28 s'étendent dans un même plan, qui est parallèle à celui des premières portions 38, et forment le deuxième étage 32 du mécanisme de réduction 12.

En comparaison avec les moteurs de l'art antérieur, le système propulsif 1 présente, pour un rapport de réduction élevé, voire très élevé, un mécanisme de réduction 12 d'encombrement plus faible. Il en résulte que la pente du canal d'entrée 3 de la veine primaire en amont du compresseur basse pression 4 est plus douce, ce qui améliore l'alimentation du compresseur basse pression 4. En parallèle, un rapport de réduction élevé permet de réduire la vitesse de rotation et le rapport de compression de la soufflante 2 et d'optimiser le dimensionnement de la turbine basse pression 9. Le rendement propulsif du système propulsif 1 est donc amélioré.

De plus, le mécanisme de réduction est inversé, c'est-à-dire que la première portion 38 des satellites 28 s'étend entre la deuxième portion 39 des satellites 28 et la soufflante 2. Il en découle que le raccordement de l'arbre de soufflante 13 au mécanisme de réduction 12 est situé en aval par rapport au raccordement de l'arbre basse pression 10 audit mécanisme de réduction 12, qui est situé plus en amont. Or, le mécanisme de réduction 12 étant biétage et la vitesse de rotation de l'arbre de soufflante 13 étant inférieure à la vitesse de rotation de l'arbre basse pression 10, le diamètre de la première portion 38 est nécessairement plus grand que le diamètre de la deuxième portion 39.

Grâce à cette configuration inversée du mécanisme de réduction 12 biétage, la partie des satellites 28 dont l'encombrement radial est le plus faible, à savoir la deuxième portion 39, est plus proche du compresseur basse pression 4, où l'espace sous veine est le plus faible, tandis que la partie des satellites 28 dont l'encombrement radial est le plus grand, à savoir la première portion 38, est plus proche de la soufflante 2 (à l'aplomb de l'entrée 18 du canal d'entrée 3), où l'espace sous veine est le plus important. La pente du canal d'entrée 3 n'est donc plus contrainte par le diamètre maximal des satellites 28, à savoir le diamètre de la première portion 38 des satellites 28, puisque ce diamètre maximal s'étend à présent au niveau de son entrée 18. La pente du canal d'entrée 3 de la veine primaire en amont du compresseur basse pression 4 peut donc être plus douce que dans les moteurs de l'art antérieur, ce qui améliore l'alimentation du compresseur basse pression 4 et donc le rendement propulsif du système propulsif 1.

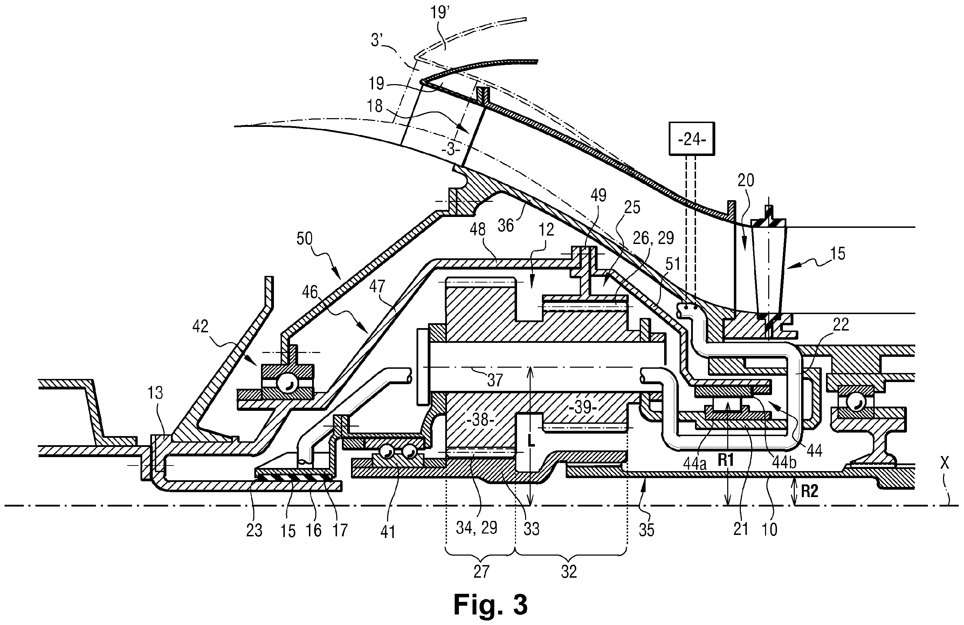

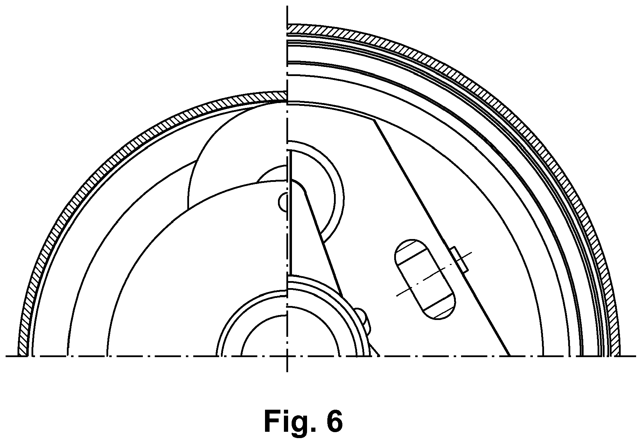

A titre de comparaison, la figure 6 illustre l'encombrement radial obtenu pour un mécanisme de réduction 12 planétaire biétage inversé (à gauche sur la figure) et un mécanisme de réduction épicycloïdal simple étage (à droite de la figure), présentant tous les deux un même rapport de réduction. Il ressort de cette comparaison que le mécanisme de réduction présentant l'encombrement radial le plus faible, pour un même rapport de réduction, est le mécanisme de réduction 12 biétage planétaire inversé. De même, on a illustré sur la figure 3 (en pointillés) la forme du canal d'entrée 3' lorsque le mécanisme de réduction est du type épicycloïdal simple étage (pour le même rapport de réduction). Comme cela ressort clairement sur cette figure 3, la pente du canal d'entrée 3' est nettement plus importante que celle du canal d'entrée 3 d'un système propulsif 1 comprenant un mécanisme de réduction 12 planétaire biétage, ce qui engendre des pertes aérodynamiques et réduit le rendement propulsif du système propulsif 1.

Le rapport de réduction du mécanisme de réduction biétage planétaire est au moins égal à 3.

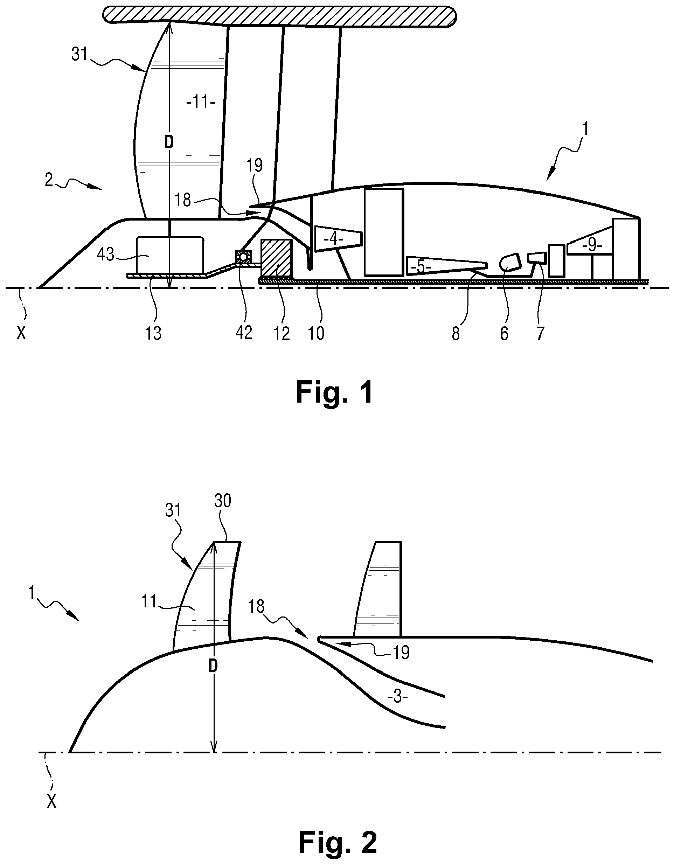

Dans le cas d'un système propulsif 1 comprenant une soufflante 2 carénée (Figure 1), et le cas échéant des aubes de soufflante 11 à calage variable, le rapport de réduction supérieur ou égal à 3 par exemple entre 4.5 et 6.

Dans le cas d'un système propulsif 1 comprenant une soufflante 2 non carénée (Figure 2), par exemple du type USF, le rapport de réduction est supérieur ou égal à 6 et inférieur ou égal à 14, de préférence inférieur ou égal à 12, par exemple entre 7 et 10.

Dans une forme de réalisation, la couronne 25 comporte des premiers moyens d'engrènement 26, les portions 38 et 39 des satellites 28 comportent chacune des deuxièmes moyens d'engrènement 29 et le pignon solaire 33 comprend des troisièmes moyens d'engrènement 34. Ces premiers, deuxièmes et troisièmes moyens d'engrènement 26, 29, 34 comprennent, de manière connue en soi, des dents droites, en chevrons ou hélicoïdales séparées deux à deux par une gorge.

Plus précisément, le pignon solaire 33 comprend une cannelure formée sur sa face radiale interne configurée pour coopérer avec une cannelure correspondante formée sur l'extrémité amont 35 de l'arbre basse pression 10 (ou, le cas échéant, une virole intermédiaire montée entre l'extrémité amont 35 de l'arbre basse pression 10 et le pignon solaire 33). En variante, l'extrémité amont 35 de l'arbre basse pression 10 (ou la virole intermédiaire) peut être formée intégralement et en une seule pièce avec le pignon solaire 33 (l'extrémité amont 35 et le pignon solaire 33 étant alors monolithiques).

La couronne 25 est mobile par rapport au carter du système propulsif 1 et est raccordée à une extrémité aval de l'arbre de soufflante 13 par l'intermédiaire d'un arbre de fixation 46 afin de l'entrainer en rotation autour de l'axe de rotation X. Dans une forme de réalisation, l'arbre de fixation 46 comprend successivement, d'amont en aval, une partie tronconique 47 raccordée à l'extrémité aval de l'arbre de soufflante 13, puis une partie 48 globalement cylindrique s'étendant radialement à l'extérieur de la première portion 39 des satellites 28 et qui est raccordée à un feston 49 fixé sur la couronne 25.

Les satellites 28 sont montés sur le porte-satellites 21, qui est fixe par rapport au carter du système propulsif. Typiquement, le porte-satellites 21 peut être monté sur la virole interne 36 du canal d'entrée 3. Chaque satellite 28 est monté mobile en rotation sur le porte-satellites 21 autour d'un axe de révolution 37 respectif, par exemple par l'intermédiaire de paliers lisses. Par ailleurs, chaque satellite 28 est symétrique de révolution par rapport à son axe de révolution 37.

Plus précisément, la première portion 38 de chaque satellite 28 est cylindrique de révolution par rapport à son axe de révolution 37 et présente une surface radiale externe configurée pour coopérer avec la surface radiale externe du pignon solaire 33. Pour cela, les deuxièmes moyens d'engrènement de la surface radiale externe de cette première portion 38, typiquement des dents 29, sont configurées pour engrener les troisièmes moyens d'engrènement 34 du pignon solaire 33, typiquement des dents formées sur sa face radiale externe.

La deuxième portion 39 de chaque satellite 28 est cylindrique de révolution par rapport à son axe de révolution 37 et présente une surface radiale externe configurée pour coopérer avec la surface radiale interne de la couronne 25. Pour cela, les deuxièmes moyens d'engrènement de la surface externe de cette deuxième portion 39, typiquement des dents 29, sont configurées pour engrener les dents 26 de la couronne 25.

La première portion 38 et la deuxième portion 39 de chaque satellite 28 sont monobloc. Par exemple, la première portion 38 et la deuxième portion 39 d'un même satellite 28 peuvent être formées intégralement et en une seule pièce (monolithique). En variante, la première portion 38 et la deuxième portion 39 d'un même satellite 28 peuvent être assemblées.

Par ailleurs, les satellites 28 d'un même mécanisme de réduction 12 sont identiques en forme et en dimension.

La mise en rotation du pignon solaire 33 par l'arbre basse pression 10 a donc pour effet d'entrainer les satellites 28 en rotation autour de leur axe de révolution 37, qui est fixe (le porte-satellites 21 étant fixé à la virole interne 36 du canal d'entrée 3). La deuxième portion 39 des satellites 28 étant engrenée avec la couronne 25, qui est mobile, leur rotation autour de leur axe de révolution 37 a pour effet de mettre en rotation la couronne 25 autour de l'axe de rotation X. Enfin, l'arbre de soufflante 13 étant raccordé à la couronne 25, la rotation de la couronne 25 autour de l'axe de rotation X a pour effet d'entrainer l'arbre de soufflante 13 en rotation autour de cet axe de rotation X.

La deuxième portion 39 des satellites 28 présentant un diamètre strictement inférieur à celui de leur première portion 38, la vitesse de rotation de l'arbre de soufflante 13 est inférieure de la vitesse de rotation de l'arbre basse pression 10. Cette différence de diamètre permet ainsi d'obtenir des rapports de réduction plus élevés que dans un mécanisme de réduction 12 simple étage, pour un encombrement radial comparable et un rendement propulsif élevé. Il en découle que le diamètre de la première portion 38 et le diamètre de la deuxième portion 39 des satellites 28 peuvent ainsi être dimensionnés de sorte à atteindre un rapport de réduction supérieur ou égal à 3 avec un encombrement radial faible, permettant ainsi d'adoucir la pente du canal d'entrée 3.

L'arbre de soufflante 13 comprend en outre un palier avant 42, ou palier de butée, et un palier arrière 44. Le palier de butée 42 est interposé entre l'arbre de soufflante 13 et une partie stator (fixe) du système propulsif 1 et est configurée pour reprendre les efforts axiaux générés par la soufflante 2 et ceux générés entre la deuxième portion 39 des satellites 28 et la couronne 25. Par exemple, le palier de butée 42 peut être monté sur la virole interne 36 du carter d'entrée 3, à proximité de l'entrée 18, par l'intermédiaire d'une virole 50.

Le palier arrière 44 est monté d'une part sur la couronne 25 (sur laquelle est monté l'arbre de soufflante 13) et d'autre part sur le porte-satellites 21 ou sur la portion du carter d'entrée 3 qui est adjacente au porte-satellites 21.

La configuration inversée du mécanisme de réduction 12 permet ainsi de placer le palier de butée 42 en amont du mécanisme de réduction 12 et le palier arrière 44 en aval de celui-ci. En effet, le diamètre minimal des satellites 28 étant en aval, un espace annulaire est dégagé sous la sortie du canal d'entrée 3 ce qui permet de faire passer des brides de fixation 51 du palier arrière 44 sur la couronne 25.

Dans une première forme de réalisation illustrée en figure 3, le palier arrière 44 s'étend sous la sortie 20 du canal d'entrée 3, en aval des satellites 28 et est raccordé d'une part à la couronne 25 et d'autre part au porte-satellite 21. La bague interne 44a du palier arrière 44 est montée sur le porte-satellites 21 tandis que sa bague externe 44b est montée sur la couronne 25, typiquement sur le feston 49, par l'intermédiaire d'une bride de fixation 51. Le palier arrière 44 peut alors s'étendre à un rayon R1 inférieur à la distance radiale L entre les axes de révolution 37 des satellites 28 et l'axe de rotation X, mais supérieur au rayon R2 de l'arbre basse pression 10 (figure 3).

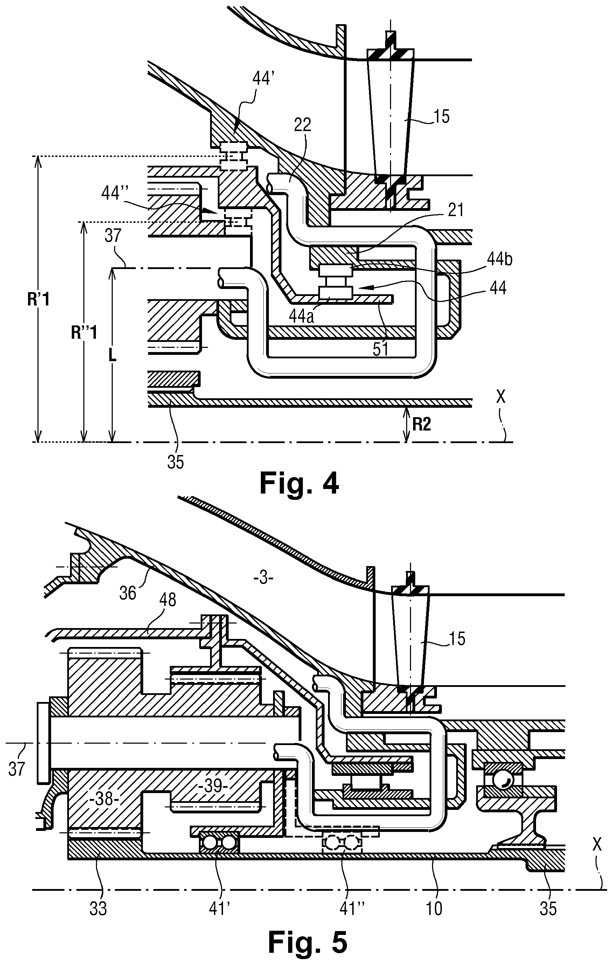

Dans une variante de cette première forme de réalisation, qui est illustrée sur la figure 4, la bague externe 44b du palier arrière 44 est montée sur le porte-satellites 21 tandis que sa bague interne 44a est montée sur la couronne 25 par l'intermédiaire de la bride de fixation 51. Le palier arrière 44 peut alors s'étendre globalement à la même distance de l'axe de rotation X que les axes de révolution 37 des satellites 28. En d'autres termes, le rayon R1 du palier arrière 44 est globalement égal à la distance radiale L. Le palier arrière 44 de cette variante de réalisation s'étend alors radialement plus à l'extérieur par rapport à l'axe de rotation X que dans le cas où la bague interne 44a est montée sur le porte-satellites 21 (figure 3).

Dans une deuxième forme de réalisation qui est représentée très schématiquement en pointillés sur la figure 4, le palier arrière 44' s'étend entre la sortie 19 du canal d'entrée 3 et la couronne 25 et est raccordé d'une part à la couronne 25 et d'autre part à la virole interne 36 du canal d'entrée 3. La bague interne du palier arrière 44' est montée sur la couronne 25 par l'intermédiaire de la bride de fixation 51 tandis que sa bague externe est montée sur la virole interne 36 du canal d'entrée 3. Le palier arrière 44' s'étend alors à un rayon R'1 supérieur au rayon de la couronne 25 tout en restant radialement à l'intérieur de la virole interne 36 du canal d'entrée 3.

Dans une troisième forme de réalisation qui est également représentée très schématiquement en pointillés sur la figure 4, le palier arrière 44" s'étend immédiatement en aval de la deuxième portion 39 des satellites 28 et est raccordé d'une part à la bride de fixation 51 et d'autre part au porte-satellites 21, au niveau de son attachement au satellites 28. La bague interne du palier arrière 44" est montée sur la bride de fixation 51 qui est raccordée à la couronne tandis que sa bague externe est montée sur le porte-satellites 21, au niveau de son attachement au satellites 28. Le palier arrière 44" s'étend alors à un rayon R"1 supérieur à la distance radiale L mais inférieur au rayon de la couronne 25.

Dans une première forme de réalisation, les dents 26, 29, 34 du mécanisme de réduction 12 sont hélicoïdales.

Dans cette forme de réalisation, le mécanisme de réduction 12 comprend en outre une butée interne 41, typiquement un palier à double billes ou une butée hydraulique et configurée pour reprendre les efforts axiaux générés entre l'arbre basse pression 10 et la première portion 38 des satellites 28 et équilibrer ainsi les efforts au sein du mécanisme de réduction 12.

Dans une première forme de réalisation illustrée sur la figure 3, la butée interne 41 est interposée entre le pignon solaire 33 et l'extrémité amont 35 de l'arbre basse pression. Par exemple, la butée interne 41 peut alors s'étendre en amont de la première portion 38 desdits satellites 28, par exemple entre le joint hydraulique 15 (décrit en détails plus loin dans la description) et le pignon solaire 33.

Dans une deuxième forme de réalisation, la butée interne 41' peut être interposée entre l'extrémité amont 35 de l'arbre basse pression 10 et le porte-satellites 21, par exemple en s'étendant radialement à l'intérieur de la deuxième portion 39 des satellites 28 (en traits pleins sur la figure 5) ou immédiatement en aval de cette deuxième portion 39 (41", en pointillés sur la figure 5), sous le porte-satellites 21.

Optionnellement, la forme hélicoïdale des dents 26, 29, 34 du mécanisme de réduction 12 permet de limiter les efforts axiaux repris par le palier de butée 42. Le choix des angles d'hélice des dents 26, 29, 34 et leur orientation (signe) permet ainsi de compenser des efforts axiaux générés par la soufflante et habituellement repris par le palier de butée 42 en créant un moment qui compense les moments au sein du mécanisme de réduction 12. Par exemple, un angle d'hélice (par rapport à un plan comprenant l'axe de rotation X et l'axe de révolution 37 du satellite 28) des dents 29 de la deuxième portion 39 de chaque satellite 28 compris entre 10° et 20° permet à l'engrènement entre la couronne 25 et la deuxième portion 39 des satellites 28 de compenser une partie au moins des efforts de traction appliqués par la soufflante 2 sur le mécanisme de réduction 12. La taille du palier de butée 42 au niveau de la soufflante 2 peut donc être réduite grâce à la compensation de l'effort de traction appliqué par la soufflante 2 sur le mécanisme de réduction 12 par les engrènements des dents hélicoïdales de la couronne 25 avec de la deuxième portion 39 des satellites 28.

Par ailleurs, un angle d'hélice (par rapport à un plan comprenant l'axe de rotation X et l'axe de révolution 37 du satellite 28) des dents 29 de la première portion 38 de chaque satellite 28 compris entre 10° et 30°, de préférence entre 15° et 25°, permet de compenser les efforts au niveau de la butée interne 41 du mécanisme de réduction 12 et donc de réduire les pertes au niveau de cette butée 41. En effet, les efforts axiaux du deuxième étage 32 sont compensés par les efforts axiaux du premier étage 27, créant ainsi un moment de basculement au niveau de la butée interne 41. Ce moment de basculement peut être compensé par les efforts d'engrènement radiaux, assurant ainsi un fonctionnement purement radial au niveau de la butée interne 41. On obtient ainsi une architecture dans laquelle le mécanisme de réduction 12 et maintenu des deux côtés par des paliers 42, 44.

On notera en outre que l'utilisation d'un mécanisme de réduction 12 biétage planétaire assouplit le dimensionnement du diamètre des cannelures de l'arbre basse pression 10. En effet, à iso-encombrement sous le canal d'entrée 3 du système propulsif 1, l'encombrement radial de la couronne 25 d'un mécanisme de réduction 12 biétage planétaire est réduit, ce qui permet, si besoin, d'augmenter le diamètre des cannelures sur l'extrémité amont 35 de l'arbre basse pression 10. A titre de comparaison, dans le cas d'un mécanisme de réduction simple étage, pour obtenir un rapport de réduction important, il est nécessaire de réduire le diamètre des cannelures de l'arbre basse pression pour respecter l'encombrement radial total du mécanisme de réduction 12 sous le canal d'entrée 3.

Dans une deuxième forme de réalisation, les dents 26, 29, 29', 34' du mécanisme de réduction 12 sont droite. Dans cette forme de réalisation, la butée interne 41 est alors optionnelle.

Le système propulsif 1 comprend en outre un joint hydraulique 15 tournant multipassage (ou OTB).

L'utilisation d'un mécanisme de réduction 12 du type planétaire permet de placer le joint hydraulique 15 en amont du mécanisme de réduction, entre la soufflante 2 et le mécanisme de réduction 12, et de le raccorder fluidiquement au réservoir d'huile 24 du groupe de lubrification par l'intermédiaire de canalisations 22 passant par le porte-satellites 21. En d'autres termes, il n'est plus nécessaire de transférer l'huile du repère fixe du moteur vers un repère tournant du mécanisme de réduction 12 pour alimenter les paliers et dentures du mécanisme de réduction : il suffit de transférer l'huile directement dans les canalisations 22 passant au travers du porte-satellites 21, qui est fixe, et d'alimenter ensuite les paliers et dentures 26, 29, 34 du mécanisme de réduction 12 depuis ces canalisations 22. Le système lubrification du système propulsif 1 est donc fortement simplifié.

En outre, le joint hydraulique 15 étant placé en amont du mécanisme de réduction 12, il est plus facile d'accès, ce qui simplifie les opérations de maintenance. De plus, le joint hydraulique 15 peut être placé plus proche de l'axe de rotation que lorsqu'il est en aval du mécanisme de réduction 12, puisqu'il n'est plus limité par le diamètre externe de l'arbre basse pression 10. En particulier, il est possible de positionner le joint hydraulique 15 radialement à l'intérieur par rapport à l'arbre de soufflante 13 : le joint hydraulique 15 est donc radialement plus proche de l'axe de rotation X que l'arbre de soufflante 13. La distance radiale d entre le joint hydraulique 15 et l'axe de rotation X est donc nettement plus faible que lorsque le joint hydraulique 15 est placé en aval du mécanisme de réduction 12, et notamment inférieure au rayon R de l'arbre basse pression 10. Les débits de fuite, qui sont proportionnels à la distance d à l'axe de rotation X, sont donc réduits, ce qui augmente drastiquement la durée de vie du joint hydraulique 15.

La structure du joint hydraulique 15 et son alimentation sont donc simplifiées.

Dans une forme de réalisation, le joint hydraulique 15 comprend une partie tournante 16 montée sur l'arbre de soufflante 13 et une partie fixe 17 montée sur le porte-satellites 21.

Optionnellement, le système propulsif 1 comprend en outre un mécanisme de changement de pas 43 configuré pour modifier l'angle de calage des aubes de soufflante 11 en fonction des phases de vol du système propulsif. Ce mécanisme de changement de pas 43 nécessite alors des moyens d'alimentations pour un vérin de changement de pas et éventuellement des moyens de lubrification (tels que des buses d'injection) alimentés en huile par le joint hydraulique 15. Le système propulsif 1 donc comprend en outre des servitudes 23 d'alimentation d'huile s'étendant entre la partie tournante 16 du joint hydraulique 15 et le mécanisme de changement de pas 43. Ces servitudes 23 sont solidaires en rotation de la partie tournante 16 du joint hydraulique 15.

Avantageusement, le joint hydraulique 15 étant positionné en amont du mécanisme de réduction 12, la distance entre le joint hydraulique 15 et les moyens de lubrification est plus courte, donc plus simple, que dans l'art antérieur.

De plus, seule la portion du joint hydraulique 15 alimentant les moyens d'actionnement du mécanisme de changement de pas 43 comprend une portion tournante, le joint hydraulique 15 étant alimenté via les canalisations 22 passant par le porte-satellites 21, qui est fixe.

Par ailleurs, dans le cas d'un système propulsif 1 comprenant une soufflante 2 carénée, le diamètre D de la soufflante 2 peut être compris entre 105 pouces (266.7 cm) et 135 pouces (342,9 cm). Dans le cas d'un système propulsif 1 comprenant une soufflante 2 non carénée, le diamètre D de la soufflante 2 peut être compris entre 150 pouces (381 cm) et 180 pouces (457,2 cm), par exemple de l'ordre de 167 pouces (424,18 cm). Par diamètre D de soufflante 2, on comprendra ici le double de la distance, dans un plan radial à l'axe de rotation X, mesurée entre l'axe de rotation X et le sommet 30 des aubes de soufflante 11 à l'intersection entre le bord d'attaque 31 et le sommet 30 de l'aube 11. Par bord d'attaque 31, on comprendra ici le bord de l'aube 11 configuré pour s'étendre en regard de l'écoulement des gaz entrant dans la soufflante 2. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

De plus, pour ces diamètres D de soufflante 2 et régimes de rotation, le rapport de compression de la soufflante 2 carénée peut être compris entre 1.04 et 1.29 tandis que le rapport de pression de la soufflante 2 non carénée peut être compris entre 1.01 et 1.025. Le rapport de compression de la soufflante 2 est mesuré ici dans les mêmes conditions que le taux de dilution, c'est-à-dire lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer.

Le taux de dilution du système propulsif 1 peut alors être compris entre 10 et 31 dans le cas d'une soufflante 2 carénée et entre 40 et 80 dans le cas d'une soufflante 2 non carénée.

La vitesse périphérique en tête des aubes de soufflante 11 (c'est-à-dire mesurée au niveau de leur sommet 30) en régime de décollage tel que défini ci-dessus est comprise entre 260 m/s et 330 m/s lorsque la soufflante 2 est carénée et 260 m/s et 330 m/s lorsque la soufflante 2 est carénée et est inférieure à 225 m/s lorsque la soufflante 2 est non carénée.

## Revendications

1. Système propulsif (1) aéronautique comprenant :
- un arbre d'entrainement (10) mobile en rotation autour d'un axe de rotation (X),
- une soufflante (2),
- un arbre de soufflante (13) configuré pour entrainer la soufflante (2) en rotation autour de l'axe de rotation (X),
- un mécanisme de réduction (12) couplant l'arbre d'entrainement (10) et l'arbre de soufflante (13),
le système propulsif (1) étant **caractérisé en ce que** le mécanisme de réduction (12) a deux étages de réduction (27, 32) et comporte :
- un pignon solaire (33), centré sur l'axe de rotation (X) et configuré pour être entrainé en rotation par l'arbre d'entrainement (10),
- une couronne (25), coaxiale avec le pignon solaire (33) et configurée pour entrainer en rotation l'arbre de soufflante (13) autour de l'axe de rotation (X), et
- une série de satellites (28) répartis circonférentiellement autour de l'axe de rotation (X) entre le pignon solaire (33) et la couronne (25), chaque satellite (28) comprenant une première portion (38) formant le premier étage de réduction (27) engrenée avec le pignon solaire (33) et une deuxième portion (39) formant le deuxième étage de réduction (32) engrenée avec la couronne (25), un diamètre de la première portion (38) étant différent d'un diamètre de la deuxième portion (39),
et **en ce que** la première portion (38) des satellites (28) s'étend entre la deuxième portion (39) des satellites (28) et la soufflante (2).

2. Système propulsif selon la revendication 1, comprenant en outre un joint hydraulique (15) tournant multipassage positionné entre la soufflante (2) et le mécanisme de réduction (12).

3. Système propulsif (1) selon la revendication 2, dans lequel la série de satellites (28) est montée sur un porte-satellites (21) et le système propulsif (1) comprend en outre un réservoir d'huile (24) et au moins une canalisation (22), la canalisation (22) connectant fluidiquement le réservoir d'huile (24) au joint hydraulique (15) en passant par le porte-satellites (21).

4. Système propulsif (1) selon l'une des revendications 2 ou 3, dans lequel le joint hydraulique (15) comprend une partie tournante (16) montée sur l'arbre de soufflante (13) et une partie fixe (17) montée sur le porte-satellites (21).

5. Système propulsif (1) selon l'une des revendications 2 à 4, dans lequel le joint hydraulique (15) est positionné radialement à l'intérieur par rapport à l'arbre de soufflante (13).

6. Système propulsif (1) selon l'une des revendications 2 à 5, dans lequel le joint hydraulique (16) est plus proche de l'axe de rotation (X) que l'arbre de soufflante (13).

7. Système propulsif (1) selon l'une des revendications 2 à 6 comprenant en outre un mécanisme de changement de pas (43) des aubes (11) de la soufflante (2) et une servitude (23) connectant fluidiquement le joint hydraulique (15) au mécanisme de changement de pas (43).

8. Système propulsif (1) selon l'une des revendications 1 à 7, dans lequel l'arbre d'entrainement (10) est raccordé au pignon solaire (33) au niveau d'une première interface, l'arbre de soufflante (13) est raccordé à la couronne (25) au niveau d'une deuxième interface, la première interface étant située plus en amont que la deuxième interface.

9. Système propulsif (1) selon l'une des revendications 1 à 8, comprenant en outre un premier palier de soufflante (42) s'étendant entre la soufflante (2) et le mécanisme de réduction (12) et un deuxième palier de soufflante (44) s'étendant entre le mécanisme de réduction (12) et une roue mobile d'un compresseur basse pression (4).

10. Système propulsif (1) selon la revendication 9, dans lequel le premier palier de soufflante (42) est monté d'une part sur l'arbre de soufflante (2) et d'autre part sur une virole interne (36) d'un canal d'entrée (3) d'un flux primaire du système propulsif (1).

11. Système propulsif (1) selon l'une des revendications 9 ou 10, dans lequel la série de satellites (28) est montée sur un porte-satellites (21) et le deuxième palier de soufflante (44) comprend une bague interne (44a) et une bague externe (44b), l'une parmi la bague interne (44a) et la bague externe (44b) étant montée sur la couronne (25), l'autre parmi la bague interne (44a) et la bague externe (22b) étant montée sur le porte-satellites (21).

12. Système propulsif (1) selon l'une des revendications 9 ou 10, dans lequel le deuxième palier de soufflante (44) est monté d'une part sur la couronne (25) et d'autre part sur une virole interne (36) d'un canal d'entrée (3) d'un flux primaire du système propulsif (1).

13. Système propulsif (1) selon l'une des revendications 1 à 12, dans lequel la série de satellites (28) est montée sur un porte-satellites (21) et le mécanisme de réduction (12) comprend en outre une butée interne (41) montée d'une part sur l'arbre d'entrainement (10) et d'autre part sur le porte-satellites (21), radialement à l'intérieur de la deuxième portion (39) des satellites (28) ou immédiatement en aval de la deuxième portion (39) desdits satellites (28).

14. Système propulsif (1) selon l'une des revendications 1 à 12, dans lequel le mécanisme de réduction (12) comprend en outre une butée interne (41) montée d'une part sur l'arbre d'entrainement (10 et d'autre part sur le pignon solaire (33) dans une zone située en amont de la première portion (38) desdits satellites (28).

15. Aéronef comprenant un système propulsif (1) selon l'une des revendications 1 à 14.

## Patentansprüche

1. Luftfahrt-Triebwerkssystem (1) mit:
- einer Antriebswelle (10), die um eine Drehachse (X) drehbar ist,
- einem Gebläse (2),
- einer Gebläsewelle (13), die so konfiguriert ist, dass sie das Gebläse (2) in Drehung um die Drehachse (X) antreibt,
- einem Untersetzungsmechanismus (12), der die Antriebswelle (10) und die Gebläsewelle (13) koppelt,
wobei das Antriebssystem (1) **dadurch gekennzeichnet ist, dass** der Untersetzungsmechanismus (12) zwei Untersetzungsstufen (27, 32) hat und umfasst:
- ein Sonnenrad (33), das auf der Drehachse (X) zentriert und so konfiguriert ist, dass es von der Antriebswelle (10) in Drehung versetzt wird,
- einen Hohlrad (25), der koaxial mit dem Sonnenrad (33) ist und so konfiguriert ist, dass er die Gebläsewelle (13) um die Drehachse (X) in Drehung versetzt, und
- eine Reihe von Satelliten (28), die in Umfangsrichtung um die Drehachse (X) zwischen dem Sonnenrad (33) und dem Hohlrad (25) verteilt sind, wobei jedes Satellitenrad (28) einen ersten Abschnitt (38) umfasst, der die erste Untersetzungsstufe (27) bildet, die mit dem Sonnenrad (33) in Eingriff steht, und einen zweiten Abschnitt (39), der die zweite Untersetzungsstufe (32) bildet, die mit dem Hohlrad (25) in Eingriff steht, wobei ein Durchmesser des ersten Abschnitts (38) von einem Durchmesser des zweiten Abschnitts (39) verschieden ist,
und dadurch, dass der erste Abschnitt (38) der Satelliten (28) sich zwischen dem zweiten Abschnitt (39) der Satelliten (28) und dem Gebläse (2) erstreckt.

2. Antriebssystem nach Anspruch 1, das außerdem eine drehbare hydraulische Mehrpass-Drehverbindung (15) umfasst, die zwischen dem Gebläse (2) und dem Reduktionsmechanismus (12) positioniert ist.

3. Antriebssystem (1) nach Anspruch 2, wobei die Reihe von Satelliten (28) an einem Satellitenträger (21) angebracht ist und das Antriebssystem (1) ferner einen Öltank (24) und mindestens eine Leitung (22) umfasst, wobei die Leitung (22) den Öltank (24) über den Satellitenträger (21) mit der hydraulischen Verbindung (15) fluidisch verbindet.

4. Antriebssystem (1) nach einem der Ansprüche 2 oder 3, wobei das hydraulische Verbindung (15) einen drehbaren Teil (16), der an der Gebläsewelle (13) angebracht ist, und einen feststehenden Teil (17), der am Planetenträger (21) angebracht ist, umfasst.

5. Antriebssystem (1) nach einem der Ansprüche 2 bis 4, wobei das hydraulische Verbindung (15) in Bezug auf die Gebläsewelle (13) radial innen positioniert ist.

6. Antriebssystem (1) nach einem der Ansprüche 2 bis 5, wobei das Hydraulikgelenk (16) näher an der Drehachse (X) liegt als die Gebläsewelle (13).

7. Antriebssystem (1) nach einem der Ansprüche 2 bis 6, das außerdem einen Mechanismus zur Änderung der Steigung (43) der Schaufeln (11) des Gebläses (2) und eine Servoeinrichtung (23) umfasst, die das hydraulische Verbindung (15) mit dem Mechanismus zur Änderung der Steigung (43) fluidisch verbindet.

8. Antriebssystem (1) nach einem der Ansprüche 1 bis 7, wobei die Antriebswelle (10) an einer ersten Schnittstelle mit dem Sonnenrad (33) verbunden ist, die Gebläsewelle (13) an einer zweiten Schnittstelle mit dem Hohlrad (25) verbunden ist, wobei die erste Schnittstelle weiter stromaufwärts als die zweite Schnittstelle angeordnet ist.

9. Antriebssystem (1) nach einem der Ansprüche 1 bis 8, ferner umfassend ein erstes Gebläselager (42), das sich zwischen dem Gebläse (2) und dem Reduktionsmechanismus (12) erstreckt, und ein zweites Gebläselager (44), das sich zwischen dem Reduktionsmechanismus (12) und einem Laufrad eines Niederdruckverdichters (4) erstreckt.

10. Antriebssystem (1) nach Anspruch 9, wobei das erste Gebläselager (42) einerseits an der Gebläsewelle (2) und andererseits an einem Innenring (36) eines Einlasskanals (3) für einen Primärstrom des Antriebssystems (1) angebracht ist.

11. Antriebssystem (1) nach einem der Ansprüche 9 oder 10, wobei die Reihe von Planetenrädern (28) an einem Planetenträger (21) angebracht ist und das zweite Gebläselager (44) einen Innenring (44a) und einen Außenring (44b) umfasst, wobei einer von dem Innenring (44a) und dem Außenring (44b) an dem Hohlrad (25) angebracht ist und der andere von dem Innenring (44a) und dem Außenring (22b) an dem Planetenträger (21) angebracht ist.

12. Antriebssystem (1) nach einem der Ansprüche 9 oder 10, wobei das zweite Gebläselager (44) einerseits an der Hohlrad (25) und andererseits an einem Innenring (36) eines Einlasskanals (3) für einen Primärstrom des Antriebssystems (1) angebracht ist.

13. Antriebssystem (1) nach einem der Ansprüche 1 bis 12, wobei die Reihe von Satelliten (28) auf einem Satellitenträger (21) montiert ist und der Untersetzungsmechanismus (12) außerdem einen inneren Anschlag (41) umfasst, der einerseits auf der Antriebswelle (10) und andererseits auf dem Satellitenträger (21) radial innerhalb des zweiten Abschnitts (39) der Satelliten (28) oder unmittelbar stromabwärts des zweiten Abschnitts (39) der Satelliten (28) montiert ist.

14. Antriebssystem (1) nach einem der Ansprüche 1 bis 12, wobei der Untersetzungsmechanismus (12) außerdem einen inneren Anschlag (41) umfasst, der einerseits auf der Antriebswelle (10) und andererseits auf dem Sonnenrad (33) in einem Bereich vor dem ersten Abschnitt (38) der Satelliten (28) angebracht ist.

15. Luftfahrzeug mit einem Antriebssystem (1) nach einem der Ansprüche 1 bis 14.

## Claims

1. An aeronautical propulsion system (1) comprising:
- a drive shaft (10) rotatable about an axis of rotation (X),
- a fan (2),
- a fan shaft (13) configured to drive the fan (2) in rotation about the axis of rotation (X),
- a reduction mechanism (12) coupling the drive shaft (10) and the fan shaft (13),
the propulsion system (1) being **characterised in that** the reduction mechanism (12) has two reduction stages (27, 32) and comprises:
- a sun gear (33), centred on the axis of rotation (X) and configured to be driven in rotation by the drive shaft (10),
- a ring gear (25), coaxial with the sun gear (33) and configured to drive the fan shaft (13) in rotation about the axis of rotation (X), and
- a series of satellites (28) distributed circumferentially about the axis of rotation (X) between the sun gear (33) and the ring gear (25), each satellite (28) comprising a first portion (38) forming the first reduction stage (27) meshed with the sun gear (33) and a second portion (39) forming the second reduction stage (32) meshed with the ring gear (25), a diameter of the first portion (38) being different from a diameter of the second portion (39),
and **in that** the first portion (38) of the satellites (28) extends between the second portion (39) of the satellites (28) and the fan (2).

2. A propulsion system as claimed in claim 1, further comprising an oil transfer bearing (15) positioned between the blower (2) and the reduction mechanism (12).

3. The propulsion system (1) of claim 2, wherein the array of satellites (28) is mounted on a planet carrier (21) and the propulsion system (1) further comprises an oil tank (24) and at least one pipeline (22), the pipeline (22) fluidly connecting the oil tank (24) to the oil transfer bearing (15) via the planet carrier (21).

4. A propulsion system (1) according to one of claims 2 or 3, wherein the oil transfer bearing (15) comprises a rotating part (16) mounted on the fan shaft (13) and a fixed part (17) mounted on the planet carrier (21).

5. A propulsion system (1) according to any of claims 2 to 4, wherein the oil transfer bearing (15) is positioned radially inwardly of the fan shaft (13).

6. A propulsion system (1) according to any of claims 2 to 5, wherein the oil transfer bearing (16) is closer to the axis of rotation (X) than the fan shaft (13).

7. Propulsion system (1) according to one of claims 2 to 6 further comprising a mechanism (43) for changing the pitch of the blades (11) of the fan (2) and a connection (23) fluidically connecting the hydraulic joint (15) to the pitch change mechanism (43).

8. A propulsion system (1) according to any of claims 1 to 7, wherein the drive shaft (10) is connected to the sun gear (33) at a first interface, the fan shaft (13) is connected to the ring gear (25) at a second interface, the first interface being located further upstream than the second interface.

9. A propulsion system (1) according to any of claims 1 to 8, further comprising a first fan bearing (42) extending between the fan (2) and the reduction mechanism (12) and a second fan bearing (44) extending between the reduction mechanism (12) and an impeller of a low pressure compressor (4).

10. Propulsion system (1) according to claim 9, in which the first fan bearing (42) is mounted on the one hand on the fan shaft (2) and on the other hand on an internal shroud (36) of an inlet duct (3) for a primary flow of the propulsion system (1).

11. A propulsion system (1) according to one of claims 9 or 10, wherein the series of satellites (28) is mounted on a planet carrier (21) and the second fan bearing (44) comprises an inner ring (44a) and an outer ring (44b), one of the inner ring (44a) and the outer ring (44b) being mounted on the ring gear (25), the other of the inner ring (44a) and the outer ring (22b) being mounted on the planet carrier (21).

12. Propulsion system (1) according to one of claims 9 or 10, wherein the second fan bearing (44) is mounted on the one hand on the ring gear (25) and on the other hand on an internal shroud (36) of an inlet duct (3) for a primary flow of the propulsion system (1).

13. Propulsion system (1) according to one of claims 1 to 12, wherein the series of satellites (28) is mounted on a planet carrier (21) and the reduction mechanism (12) further comprises an internal stop (41) mounted on the one hand on the drive shaft (10) and on the other hand on the planet carrier (21), radially inside the second portion (39) of the satellites (28) or immediately downstream of the second portion (39) of said satellites (28).

14. Propulsion system (1) according to one of claims 1 to 12, wherein the reduction mechanism (12) further comprises an internal stop (41) mounted on the one hand on the drive shaft (10) and on the other hand on the sun gear (33) in an area located upstream of the first portion (38) of said satellites (28).

15. Aircraft comprising a propulsion system (1) according to one of claims 1 to 14.
